# EUROPEAN PATENT APPLICATION

(11) **EP 4 317 098 A1**
(43) Date of publication of application: **07.02.2024**
(21) Application number: 22386069.3
(22) Date of filing: 21.10.2022
(51) Int. Cl.: C03C 17/30, C03C 17/34, C09D 183/00, C09J 183/00, B05D 3/10

(54) **DURABLE PROTECTIVE EASY-TO-CLEAN NANO-COATING SYSTEMS**

(30) Priority: 01.08.2022 GR 20220100627
(71) Applicant: PAPADOPOULOS NIKOLAOS-XAFAKIS SOTIRIOS G.P., 11633 Pagrati, Athens (GR)
(72) Inventor: Papadopoulos, Nikolaos, Sotirios (GR)

(57) **Abstract**

The present innovation refers to a method of coating smooth, non-absorbing surfaces with an easy-to-clean ultra-thin layer, which will prevent the adhesion of inorganic and organic contaminants. This method completely restores the substrate, especially if it is glass or ceramic, and is implemented in three stages. In the first stage, the substrate is restored though the chemical-mechanical action of an abrasive aqueous suspension. In the second stage, the substrate is cleaned and at the same time it is coated by a thin film, which acts as primer for the top coat. In the third stage, a coating solution is applied, which, when it comes into contact with the substrate, forms an easy-to-clean nano-layer that gradually gets harder under ambient conditions. The coating thus formed has increased mechanical strength, protecting the substrate against both chemical and mechanical damage and can be applied on various substrates.

## Description

### FIELD OF THE INVENTION

This invention refers to a new system of restoring and coating solid surfaces with an easy-to-clean ultra-thin layer, which will prevent the adhesion of inorganic and organic contaminants, having at the same time a protective function against chemical and mechanical damage. The invention includes the application method, as well as the possible uses. This system has general applicability to numerous smooth, non-absorbing substrates.

### BACKGROUND OF THE INVENTION

Surfaces inhibiting the adhesion of contaminants are called "easy-to-clean" and their behavior is usually attributed to the display of hydrophobic and oleophobic properties. The process of covering non porous surfaces with a non-sticky coating has been a common practice for several years, either for functional or aesthetic reasons (e.g. lime-scaling in a glass shower cabin). In the past, there have been numerous attempts [1-28] relating to the development of systems that give easy-to-clean properties, in a range of substrates (eg. glass, ceramic, plastic, metallic etc), usually through hydro-chemical methods.

At a larger scale, the process of coating common substrates presents several difficulties. The sol-gel method is an effective solution with industrial perspective.

Sol-gel coatings are widely accepted because of their low cost combined with their satisfactory properties. Many patents describe the development of sol-gel hydrophobic and oleophobic coatings e.g. through the use of fluorinated silane derivatives [4, 5, 9, 20, 22, 24, 26]. In fact, in several cases, coatings may display a superhydrophobic behavior [1, 3, 8, 25]. Most systems mainly refer to hydroxylated surfaces, e.g. glass [11, 17, 18, 27] or metallic [19, 21, 24]. Coatings reach their highest functionality in one or more stages [14], either under usual conditions [10], or after curing in high temperatures [5, 20, 26]. Many systems are stable during storage [9], while in two-component systems [7, 18, 22] the coating solution is produced on-site, before its application.

In general terms, however, the efficiency of sol-gel systems in a wide range of conditions and their functionality throughout time remain questionable. Moreover, application of the coatings is not always attractive to the end user, due to limited storage stability, toxicity, high curing temperatures and sometimes, restricted range of suitability-for example, a coating applied on the cut edge of an aluminum profile must sufficiently adhere, not only to the bare metal, but also to the painting.

Of course, usually, the biggest problem is limited durability. This is partially because preparation of the substrates is usually inadequate. Several patents [6, 16] focus exclusively on the appropriate activation of the substrate, before it is coated.

Especially, in the case of glass substrates, sodium frequently diffuses out from the substrate to the coating resulting in the reduction of the latter's mechanical strength. In fact, diffusion is increased, when substrate preparation is inadequate, or when the temperature, on which the coating hardens, must exceed 170 °C. To address this issue, it has been proposed to increase the thickness of coatings (more than 150 nm). Nonetheless, this practice may reduce either the transparency of the substrate or the resistance of the coating to abrasion.

Referring to the raw materials used for the production of commercial hydrophobic coatings, they are usually either polymerized siloxanes (e.g., PDMS) with branched compounds, in the silicon centers of which non-polar methyl or phenyl compounds are usually attached, or alkyl-silanes and their derivatives (e.g., FAS), in which there are also non-polar groups.

Water is driven away due to the polarity of its molecules. Anchoring of the coating layer on the surface is achieved via Van der Waals weak forces, via hydrogen bonding, or via covalent bonds.

In adequately hydroxylated substrates, more stable structures are generally secured with the use of alkyl silanes, since the coating is attached to the substrate through surface oxygen atoms. The strength of adsorption and consequently, the mechanical and chemical resistance of the coating are strongly influenced by the purity of the substrate. The purer it is, the more bonds are developed between the coating and free surface-active centers. Therefore, degraded substrates, namely substrates, in which there has been accumulation of contaminants or whose initial surface characteristics have been distorted, must be restored before being coated, in order the maximum possible number of surface anchorage points to be revealed.

The restoration method plays a decisive role, especially in precision applications e.g., chemical-mechanical polishing (CMP) in microelectronics. In these cases, abrasive aqueous suspensions are frequently used and must be properly stabilized, because: a) the constant presence of a liquid layer between the surface and the moving part of the polisher is necessary, in order to avoid damages due to excessive heating of the substrate, and b) the preparation of abrasive suspensions only a few minutes before their use is adverse and it usually requires complex equipment, e.g. auxiliary devices for the constant mixture and supply of the material in hyper-clean facilities.

However, common agents used for stabilizing aqueous abrasive suspensions for more than 48 hours can be functional only in low-solids concentrations. Therefore, prior to use an intense and extended agitation of the suspension is required which restricts its broad applicability.

Referring to hard non-hydroxylated substrates (e.g., plastic or painted ones), the coating can be stably attached only once the surface is treated using plasma, a fact which imposes technical restrictions, especially in the case of large surfaces. Moreover, in metallic substrates, there is usually need for multiple stages of surface treatment before coating, while the process may be different from one metal to the other metal. At the same time, roughening processes are not seen as an acceptable solution for the improvement of the mechanic adhesion of the coating, since they effect the transparency of polished substrates negatively (as in the case of electropolished stainless steel).

Consequently, it is necessary to develop a resilient nano-coating system for multiple substrates. This should: a) restore a surface, bringing it back to its original state and b) protect it against damages that occur over time, offering it properties as easy-to clean, thanks to the development of an anti-adhesive and optically transparent ultra-thin film. The latter shall maintain its functionality long-term, without being significantly affected by abrasion, UV and the effect of chemicals. The coating should non blur in low light, should be resistant to high temperatures and sudden changes in temperature, should breathe having an excellent step coverage, should have minimum roughness and should not absorb solar radiation. Moreover, curing should ideally be carried out at ambient temperature. Finally, the coating solution should remain stable when stored for at least one year.

### DETAILED DESCRIPTION OF THE INVENTION

The present invention describes a pioneering system for the manufacturing of protective, easy-to-clean nano-coatings of high mechanical strength and wide applicability, suitable for almost every hard and smooth surface. This system includes three implementation stages:
a) The stage of chemical-mechanical restoration of the substrate. At this stage, the degenerate substrate is polished with an aqueous abrasive suspension for removing contaminants and possibly revealing any surface-active centers. Its production entails the mixture of the following ingredients:
   i) water with a conductivity of less than 10 mS/cm, preferably less than 5 mS/cm;
   ii) a mixture of abrasive particles from rare-earth metal oxides, metal oxides and non-metal oxides, with a total amount of 0.2-70% by weight, preferably 3.75-25% w/w;
   iii) a pH regulator;
   iv) a liquid dispersant at an amount of 0.01% to 10% by weight, preferably between 0.05 and 1% w/w;
   v) a suspension stabilizer, e.g., a hydrocolloid at an amount of 0.1 to 10% by weight, preferably between 0.1 and 5% w/w;
   vi) an adsorbent mineral, with a Mohs hardness, on the Mohs scale, between 1 and 4, with high capacity of binding inorganic and organic elements and at an amount of 0.1 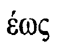 10% by weight, preferably between 0.5 and 7% w/w;
   vii) a preservative at an amount of 0.01 to 2% by weight, preferably 0.1-0.2% w/w.

Degenerate substrate is every substrate, which is not in its original state, either due to the accumulation of deposits, contaminants and dust or due to the chemical and mechanical damage of its surface.

The particle mixture causes the mechanical abrasion of the substrate. It consists of particles from rare-earth metal oxides (e.g., cerium, lanthanum), metal oxides (e.g., aluminum, iron and chromium oxides) as well as oxides of non-metals or metalloids (e.g. silicon). Preferably, rare-earth oxides form at least 50% of the weight of the mixture. Apart from the abovementioned oxides, minerals and rocks (e.g. bauxite, laterite), or industrial processing waste from metal ores (e.g. rust, red mud) may also be used. The particles have an average diameter of 0.1-10 mm, preferably 0.5-2.5 mm, in order mechanical abrasion to be carried out as fast as possible, without damaging the substrate.

In the case of hydroxylated substrates, removing a 10A thick surface material is usually enough, in order adhesion to be significantly improved. This is because surface nano-roughness is increased, while at the same time the micro-roughness profile is smoothened. The latter directly depends on the pH of the suspension, since surface roughness is generally reduced at higher pH values, but the rate, in which the surface material is removed, may be either increased or reduced, depending on the substrate and the type of oxide used as abrasive. The right pH value is directly dependent on the type of the dispersant (anionic or cationic), since at pH values that are higher than the iso-electric point, M-O⁻ group generally prevail, while in lower pH values, M-OH₂⁺ groups prevail (M: cation in the compound describing the chemical formula of the particles).

In non-hydroxylated hard substrates (e.g. thermoplastic ones), the abovementioned procedure become less important, but again contributes to the better preparation of the substrate.

The stabilizer, preferably a water-soluble hydrocolloid with a viscosity between 50,000 and 150,000 mPas, improves leveling and increases the viscosity of the suspension.

The homogenous suspension of the particles is ensured through a dispersing agent by enhancing the electrostatic repulsion between the anionic radicals of the dispersant and the surface charge of the oxide particles. In the present innovation, the dispersant's molecular weight varies from 1,000 to 100,000, preferably from 3,000 to 25,000 and includes carbon-carbon unsaturated bonds, which enhance cross-linking. Aluminosilicates and other minerals (bentonite, montmorillonite, sepiolite, diatomaceous earth, talc, kaoline, attapulgite, pumice stone, etc), ionexchange materials or any combination of them may be used as adsorbents. The existence of an adsorbent is essential, since it removes inorganic or organic contaminants and increases the viscosity of the suspension. Meanwhile, it normalizes the action of abrasive particles and prevents any damage to sensitive surfaces (e.g., plastics), contributing to the improvement of the surface finishing.

The suspension is water-based; therefore, the use of a preservative is considered essential for its preservation over time. For example, the classic preservatives of the isothiazolinone groups are quite effective in small concentrations.

It was unexpectedly shown that, in the case of degenerate glass surfaces, the use of the previous suspension would result in the total restoration of the surface through the solubilisation of its surface silica layers. This process probably takes place in two stages, which are carried out either alone or in combination. At the first stage, there is ion exchange between the sodium cations of glass and the hydrogen cations of its surroundings. As the active surface in contact with the aqueous suspension expands, glass is gradually enriched in surface silicon ions, stripping down its interior. At the second stage, Si-O-Si bonds of the matrix network are hydrolyzed forming Si-OH bonds; consequently, the specific area is further increased, due to the solubilisation of the surface layers of glass and the subsequent reduction of silica concentration. Since the abovementioned mechanism is kinetically slow, using a motorized agent for abrading the surface (e.g., a sander or a polisher), as well as increasing the suspensions' pH would accelerate the solubilisation of the layers. This process is accompanied by the appearance of surface hydroxyls, which offer a hydrophilic character to the substrate, making it more wettable. An excessive pH increase (e.g., above 12) should be however avoided, since it could lead to sudden glass distortion.

At pH values between 8 and 11, the restoration suspension of the present innovation combines high removal rates and an exquisite surface finishing, without causing macro-roughness to the substrate. Its functionality may be further upgraded with the use of particles of similar hardness but opposite surface charge, enabling the preservation of the abrasive action of the suspension for a long time, without creating aggregates, in fact close to the iso-electric point of the particles.

When aiming at increasing the roughness of the surface (e.g., for improving adhesion) or removing surface oxidation, chemical-mechanical abrasion should better take place in the acidic region by the addition of a suitable inorganic acid (e.g., hydrochloric, phosphoric, sulfamic acid, etc) and at pH values, preferably, between 2 and 5, provided that the nature of the surface allows so. The extended contact of the suspension with the substrate shall be avoided.

The suspension has anti-precipitation properties keeping its texture for approximately 10 days, without degenerating its action, even in temperatures over 50 °C. It displays at any time a minimum viscosity value of 20 cP at 25 °C, it retrieves its original texture and functionality with the minimum agitation, it does not agglomerate, it has a thixotropic behavior, it does not settle at the walls of the container and maintains its consistency for a long time.

It is applied on the surface either manually with a sponge or, preferably, by using a rotary or angular polisher at medium rounds (e.g., 1.500 rpm). The preparation of a substrate is completed, only when it is totally wetted by the suspension, in other words without any islands being formed.
b) The stage of substrate activation, during which the substrate is cleaned and at the same time it is coated with a thin film that serves as a primer for the top coat. At this stage, a solution is used consisting of:
i) organosilane A, at an amount of 0.1-10% w/w, preferably 0.2-2% w/w, with up to 3 hydrolyzed groups, of the formula (I):

   G-R¹-Si(R²)ₐ(Q)₃₋ₐ (I)

   where G is a glycidol, amine, vinyl or methacrylic functional group, R¹ is a divalent saturated hydrocarbon radical having up to 18 carbon atoms, R² is an alkyl radical having up to 12 carbon atoms and Q is an alkoxy radical having up to 8 carbon atoms or chlorine, with a having a value of 0 or 1;
ii) a mixture of organic solvents, preferably, of water-soluble alcohols, with a total amount of at least 90% w/w;
iii) de-ionized water with a conductivity of less than 10 mS/cm, preferably less than 5 mS/cm;
iv) inorganic or organic acid, as catalyst.

At this stage, organic waste and any other residues stemming from the first stage of the process are eliminated and a thin film is formed, which is covalently bonded to the top coat, thus increasing the adhesion of the latter on moderately hydroxylated substrates (e.g., metallic surfaces). Even on substrates without surface hydroxyls, such as plastics, the characteristic group of organosilane A accelerates the cross-linking rate between chains of the primer and the top coat. Consequently, a compact modified structure with high interconnection degree and satisfactory mechanical strength is formed. For example, in case aminopropyltrithoxysilane is used as organosilane A and the substrate is polycarbonate or acrylic, the improvement of the adhesion is attributed to the creation of urethane or amide linkages, respectively.

At least one of the alcohols has a free hydroxyl radical at one edge and at least one of them is used for reducing the vapor pressure of the mixture, in order its proper application in external conditions to be facilitated. Lower monohydric alcohols are preferred, since they easily form in combination with water azeotrope mixtures, the rapid evaporation of which is significantly limiting the time needed, in order the developed film to gain satisfactory mechanical resistance, to such an extent that its stability will not be affected after the application of alcohol solutions, like the top-coat coating used in the present invention. The appropriate mixture is also selected based on the chemical resistance of the substrate.

The abovementioned mixture may also contain other organic solvents (e.g. esters), which are miscible with alcohols and ideally, they jointly display surfactant properties, as well as solvent properties, in order to ensure on the one hand, that residues are totally removed and on the other hand, that the mixture gets homogenous. The concentration of these solvents in the mixture is 1-10% w/w, preferably 1-5% w/w.

The catalyst may be an inorganic or an organic acid. Among the inorganic acids, hydrochloric acid seems to be the most beneficial, since it has a high ionization and evaporation constant and high carrier mobility. Sulfuric acid is also beneficial, since it is hygroscopic, it exists in molecular form in the absence of water and has a high acidity, while, as a non-volatile substance, it improves the stability of the solution. Among the organic acids, glacial acetic acid is preferred the most.

The activator is applied to the substrate either manually with a microfiber cloth or with a motorized felt pad in low and mid-speed ranges (e.g., 500-1,500 rpm). Then, it is left for approximately 1-2 minutes to dry in air.
c) The stage of development of the coating. Once the substrate is activated, the application of the coating solution follows, in order a protective easy-to-clean film to be developed. The coating solution consists of the following components:
i) an organosilane B with up to 4 hydrolyzed groups, of the formula (II):

   R³_{b}Si(T)_{4-b} (II)

   where R³ is independently an alkyl, alkenyl or aryl radical with up to 12 carbon atoms and T is an alkoxy group with up to 12 carbon atoms or chloride, and b is 0 or 1 or 2;
ii) an organosilane C, which is selected from a group of:
   at least one cationic organosilane derivative with quaternary ammonium salts of the formula (III):

      (W)₃Si(R⁴)-N⁺-R⁵R⁶R⁷ X⁻ (III)

      where W is an alkoxy radical having up to 8 carbon atoms, R⁴ is a divalent saturated hydrocarbon radical having up to 12 carbon atoms, R⁵ and R⁶, are independently a hydrogen or an alkyl radical having up to 12 carbon atoms, R⁷ is a saturated or unsaturated hydrocarbon radical having from 8 to about 24 carbon atoms and X is a halogen or carboxyl or hydroxide or phosphate or sulphate or nitrate radical;
      or
   at least one fluoroalkylsilane with up to 3 hydrolyzed groups of the formula (IV):

      CF₃(CF₂)_{c}R⁸Si(R⁹)ₙ(Y)₃₋ₙ (IV)

      where R⁸ is a divalent saturated hydrocarbon radical having up to 4 carbon atoms, R⁹ is an alkyl radical having up to 3 carbon atoms, Y is an alkoxy group having up to 4 carbon atoms, with the value of c varying from 1 to 12, and n is 0 or 1;
iii) an inorganic or organic acid as catalyst,
iv) solvent, preferably an alcohol or mixture of an alcohol and de-ionized water, in which alcohol concentration is at least 70% w/w.

The coating solution should be left for aging at ambient temperature for approximately 24 hours before its application. Preferably, the silanes are separately hydrolyzed at a pH between 3 and 4 for at least 2 hours and then mixed into the solvent, in order to be co-aged. In this case, the initial concentration of each silane solution should be as high as possible, so that, once they are added to the final mixture, the amount of water transferred is the lowest possible.

The catalyst accelerates hydrolysis polycondensation reactions within the mixture of silanes, especially at pH values between around 3 and around 5. The total concentration of the silane mixture in the coating solution is 0.1 to 25% w/w, preferably 1 to 7% w/w. The relative weight ratio of organosilanes B and C varies from about 1:1 to about 10:1 w/w, preferably from about 3:1 to about 5:1 w/w.

Organosilane B offers the background needed for the growth of a three-dimensional silicate matrix. Organosilane C provides enhanced anti-pollutant features to the matrix. In fact, the presence of cationic groups increases the mechanical resistance of the final structure, especially when this is applied on anionic substrates, such as glass.

The film that is created in this way acts as protection for the underlying surface and has unexpectedly good easy-to-clean properties.

The catalyst may be either an inorganic or an organic acid. Among the inorganic acids, sulfuric and hydrochloric acid are preferred the most. In several circumstances, chlorosilanes may also be used, the hydrolysis of which produces hydrogen chloride. Among possible organic acids, glacial acetic acid is preferred the most.

Compounds with relatively high vapor pressure at normal temperature may be used as solvents. Alcohols are preferable due to their chemical affinity with the silane hydrolysis derivatives. Particularly preferable are the monohydric saturated alcohols with three or less carbon atoms, excluding methanol, which is rejected due to its toxicity. Alcohol purity should exceed 99%. Glycols, ethers, esters and organic salts in very low concentrations are seen as the appropriate denaturing agents.

The concentration of the solvent in the final coating solution shall be at least 60%, preferably at least 80%. In case a water and alcohol mixture is used as solvent, alcohol concentration should be at least 70% w/w, preferably at least 90 w/w. The % w/w concentration of water in the coating solution shall be 0.1-30%, preferably 0.1-10%.

The coating solution may also contain a wetting agent, preferably an alkyl polyglycoside or an alkoxylated fatty alcohol, at a small amount, typically lower than 0.2% w/w.

The coating solution may also contain small amounts of hydrophobic particles (such as amorphous silica) with a large specific surface area, in order the final film to acquire super-hydrophobic features.

Moreover, it may contain small amounts of rheology modifiers, preservatives, UV stabilizers, etc. UV absorbers, inhibited amines or nanoparticles that protect against the whole range of UV-B/UV-A (e.g., ZnO, TiO₂, etc) may be used as UV stabilizers, without reducing the transparency of the developed film.

The coating shall be left to cure at ambient temperature for at least 24 hours, until it reaches its full functionality. Curing time can be accelerated, by heat treatment at 100-200 °C, preferably at 150 °C, in order to prevent diffusion of any alkaline elements from the substrate.

Precursor silanes remain in the coating solution in the form of oligomers. The coating membrane is formed on the surface of the substrate. This phenomenon evolves at ambient temperature and from the surface of the substrate to the outside, leading to the development of stable covalent bonds between the substrate and the primer and between the primer and the coating. Once the solvent is fully evaporated (e.g., after 10 minutes), the surface is washed out with water, in order hydrolysis reactions to be completed and any residues to be removed.

The thickness of the coating structure varies between 50 and 150 nm. Nevertheless, it has great resistance to abrasion, to UV and to chemicals/cleaners. It is produced in a repeatable manner and is widely applicable to smooth, non-absorbing surfaces, e.g., glass, ceramic, plastic, painted, metallic and mineral surfaces of any shape and size. It has to be noted, that the more hydrophilic a surface is after the use of the activator, the better the result. Typical examples of applications are glass shower cabins, surfaces of buildings / cars / marine vessels / airplanes, photovoltaic modules and solar collectors, sanitary ware, glazed tiles, ceramic stoves, enamel, touch screens of electronics, kitchen and bathroom worktops, metallic railings, tanks, aluminum frames, plastic inserts, etc.

In the present invention, it was surprisingly found that the film developed protects the substrate against mechanical damage, caused, for example, by abrasion or engraving, as well as against chemical degeneration, such as corrosion. Moreover, it was surprisingly found that, apart from its easy-to-clean properties, the top coat also displays antistatic characteristics and self-cleaning and anti-graffiti features.

Once a surface is coated, it can be cleaned very easily using for example a micro-fiber cloth and some water or a common cleaner.

Moreover, it was found that the developed film does not affect the transmission of incoming solar radiation; therefore, its application to transparent substrates, solar collectors and concentrated solar power receivers is seen as beneficial.

Coating may be applied by any of the common coating methods, for instance via HLVP spraying, dipping, spreading (manually or with a polisher) etc.

The method of the present invention has industrial applicability. The coating of large substrates may be performed by moving the latter, at a constant speed through spray nozzles transversely placed to the direction of the movement of the substrate and at a fixed distance between each other. Full curing of the coating is achieved in at least 24 hours, preferably 96 hours after its application, at room temperature and relative humidity between 35 and 60%. In that period, contact with water or chemicals and means that cause damage should be avoided.

Depending on the needs and the substrate material, the composition of the suspension, the activator and the coating solution may change in such a way that the application philosophy of the abovementioned system is not altered. For example, the restoration of glass substrates may be carried out using a mixture of cerium-enriched oxides, while thermoplastic and metallic substrates may be better restored using mixtures of oxides, enriched with aluminum and chromium oxides, respectively.

The sequence of steps described in the present invention for the development of the end structure may be characterized as a coating system, rather than coating, in the sense that a "coating system" implies a sequence of processes for the restoration, activation and coating of a surface. Finally, it should be noted that in order the above mentioned functionality of the coating to be properly displayed, all three stages of implementation of the process are necessary. Exclusively and only in the case of new glass or glazed ceramic and ceramic-glass surfaces, the first stage of chemical-mechanical restoration may be omitted, without any considerable impact on the quality of the coating produced.

### References

### US Patents:

**1.** (2011/0094417 A1) Hydrophobic self-cleaning coating solutions.
**2.** (1984/3,579,540 B1) Method for protecting nonporous substrates and for rendering them water repellant.
**3.** (2012/8,338,351 B2) Coating compositions for producing transparent super-hydrophobic surfaces.
**4.** (2003/6,511,753 B1) Process for producing article coated with water-repellent film. Article coated with water-repellent film and liquid composition for water-repellent film, article coated.
**5.** (1997/5,693,365) Method for forming water-repellent film.
**6.** (1999/5,980,990) Water repellent surface treatment with acid activation.
**7.** (2009/7,578,877 B2) Two-component coating system for equipping smooth surfaces with easy-to-clean properties.
**8.** (2012/8,258,206 B2) Hydrophobic coating compositions for drag reduction.
**9.** (2008/0210130 A1) Storage-stable coating composition for abrasion-resistantly and weathering-stably providing smooth inorganic surfaces with easy-to-clean properties.
**10.** (2013/0109261 A1) Coating systems capable of forming ambiently cured highly durable hydrophobic coatings on substrates.
**11.** (2002/6,461,537 B1) Water repellent glass treatment for automotive applications.
**12.** (2004/0209072 A1) Cleaning-friendly apparatus with an easily cleanable, heat resistant surface coating.
**13.** (2004/0053058 A1) Water-repellent film-coated articles, water-repellent film-coating liquid composition and process for preparation of water-repellent film-coated articles.
**14.** (2001/6,245,387 B1) Capped silicone film and method of manufacture thereof.
**15.** (2002/6,361,871 B1) Composition of organofluorine-functional silanes and/or siloxanes, process for preparing it and its use.
**16.** (2000/6,025,025) Water-repellent surface treatment.
**17.** (1999/5,889,086) Water repellent for automobile window glass.
**18.** (2005/0004264 A1) Two-pack type water repellent for glass surface.
**19.** (2011/7,919,147 B2) Coating method.
**20.** (2013/0178580 A1) Water-repellent and oil-repellent coating and formation method thereof.
**21.** (2007/0027232 A1) Coating compositions incorporating nanotechnology and methods for making same.
**22.** (2003/6,630,205 B2) Self-crosslinking compositions based on fluorine-containing polycondensates.
**23.** (2003/6,548,116 B2) Method for manufacturing a chemically adsorbed film and a chemical adsorbent solution for the method.
**24.** (2001/6,177,582 B1) Fluoroalkyl-functional organosiloxane-containing compositions based on alcohol, a process for their preparation and their use.
   **WO Pat.:**
**25.** (2014/095299 A1) Composition for hydrophobic coating.
**26.** (2003/014232 A1) Material for producing abrasion-proof, hydrophobic and/or oleophobic coatings.
   **Eur. Pat.:**
**27.** (2005/EP 1 555 249 A1) Hydrophobic and/or oleophobic coating on microstructured glass surfaces providing an anti-fingerprint effect.
**28.** (2011/EP2294153A1) Coating composition and process for preparing it.

## Claims

1. A method for the development of a durable protective easy-to-clean coating system for smooth non-absorbent surfaces, comprising:
a) a first stage of surface restoration through chemical-mechanical polishing of the substrate with an abrasive aqueous suspension, consisting of:
i) water with a conductivity of less than 10 mS/cm, preferably less than 5 mS/cm;
ii) a mixture of abrasive particles from rare-earth metal oxides, metal oxides and non-metal oxides, with a total amount of 0.2-70% by weight, preferably 3.75-25% w/w;
iii) a pH regulator;
iv) a liquid dispersant at an amount of 0.01% to 10% by weight, preferably between 0.05 and 1% w/w;
v) a suspension stabilizer, e.g., a hydrocolloid at an amount of 0.1 to 10% by weight, preferably between 0.1 and 5% w/w;
vi) an adsorbent mineral, with a Mohs hardness, on the Mohs scale, between 1 and 4, with high capacity of binding inorganic and organic elements and at an amount of 0.1 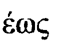 10% by weight, preferably between 0.5 and 7% w/w;
vii) a preservative at an amount of 0.01 to 2% by weight, preferably 0.1-0.2% w/w;
b) a second stage of surface activation, during which the substrate is cleaned and at the same time it is coated by a thin film that serves as a primer for the top coat, with a solution, consisting of:
i) an organosilane A having functional groups which can bond covalently to the top coat, at an amount of 0.1-10% w/w, preferably 0.2-2% w/w;
ii) a mixture of organic solvents, preferably, of water-soluble alcohols, with a total amount of at least 90% w/w;
iii) de-ionized water with a conductivity of less than 10 mS/cm, preferably less than 5 mS/cm;
iv) an inorganic or organic acid, as catalyst; and
c) a third stage of coating the activated substrate, for the development of the protective easy-to-clean layer, with a solution, consisting of:
i) a mixture of organosilanes, comprising an organosilane B, which offers the background needed for the growth of a three-dimensional silicate matrix, and an organosilane C, which provides to the said three-dimensional silicate matrix permanent easy-to-clean properties, with a total organosilane amount of 0.1-25% w/w, preferably 1-7% w/w and with a relative weight ratio (weight B:weight C) from about 1:1 to about 10:1, preferably from about 3:1 to about 5:1;
ii) an inorganic or organic acid as catalyst,
iii) solvent, preferably an alcohol or mixture of an alcohol and de-ionized water, in which alcohol concentration is at least 70% w/w.

2. The method according to claim 1, wherein said organosilane A is selected from the group consisting of:
organosilanes of the formula (I):
G-R¹-Si(R²)ₐ(Q)₃₋ₐ (I)
where G is a glycidol, amine, vinyl or methacrylic functional group, R¹ is a divalent saturated hydrocarbon radical having up to 18 carbon atoms, R² is an alkyl radical having up to 12 carbon atoms, Q is an alkoxy radical having up to 8 carbon atoms or chlorine, and a is 0 or 1.

3. The method according to claim 1, wherein said organosilane B is selected from the group consisting of:
organosilanes of the formula (II):
R³_{b}Si(T)_{4-b} (II)
where R³ is independently an alkyl, alkenyl or aryl radical having up to 12 carbon atoms, T is an alkoxy group having up to 12 carbon atoms or chloride, and b is 0 or 1 or 2.

4. The method according to claim 1, wherein said organosilane C is selected from the group consisting of:
at least one cationic organosilane derivative with quaternary ammonium salts of the formula (III):
(W)₃Si(R⁴)-N⁺-R⁵R⁶R⁷ X⁻ (III)
where W is an alkoxy radical having up to 8 carbon atoms, R⁴ is a divalent saturated hydrocarbon radical having up to 12 carbon atoms, R⁵ and R⁶, are independently a hydrogen or an alkyl radical having up to 12 carbon atoms, R⁷ is a saturated or unsaturated hydrocarbon radical having from 8 to about 24 carbon atoms and X is a halogen or carboxyl or hydroxide or phosphate or sulphate or nitrate radical;
or
at least one fluoroalkylsilane of the formula (IV):
CF₃(CF₂)_{c}R⁸Si(R⁹)ₙ(Y)₃₋ₙ (IV)
where R⁸ is a divalent saturated hydrocarbon radical having up to 4 carbon atoms, R⁹ is an alkyl radical having up to 3 carbon atoms, Y is an alkoxy group having up to 4 carbon atoms, with the value of c varying from 1 to 12, and n is 0 or 1.

5. The method according to claim 1, wherein said coating solution of the activated substrate may also contain hydrophobic particles with a large specific surface area, in order the top coat to acquire super-hydrophobic features.

6. The method according to claim 1, wherein said smooth non-absorbent surfaces are selected from the group consisting of glass, metal, plastics, and painted surfaces.
